# EUROPÄISCHE PATENTANMELDUNG

(11) **EP 2 213 259 A1**
(43) Veröffentlichungstag der Anmeldung: **04.08.2010**
(21) Anmeldenummer: 09001362.4
(22) Anmeldetag: 31.01.2009
(51) Int. Cl.: A61C 8/00

(54) **Abformpfosten für Dentalimplantat**

(71) Anmelder: Straumann Holding AG, 4002 Basel (CH)
(72) Erfinder: Müller, Daniele, 4102 Binningen (CH); Schürch, Hans, 4425 Titterten (CH); Schwieder, Fabian, 4056 Basel (CH); Kenk, Frank, 79576 Weil (DE); Kast, Holger, 79539 Lörrach (DE)
(74) Vertreter: Schaad, Balass, Menzl & Partner AG

(57) **Zusammenfassung**

Die Erfindung betrifft einen Abformpfosten für ein Dentalimplantat umfassend eine hülsenförmige Abformkappe (4) mit einem Kopplungsabschnitt (16), der dazu bestimmt ist, mit dem Dentalimplantat (20) verbunden zu werden, und einer im Wesentlichen zylinderförmigen, sich in Längsrichtung der Abformkappe (4) erstreckenden Ausnehmung (6) und ein die Ausnehmung (6) durchgreifendes Befestigungselement (8) zur Befestigung der Abformkappe (4) am Dentalimplantat (20). Der erfindungsgemässe Abformpfosten ist **dadurch gekennzeichnet, dass** die Abformkappe (4) eine Innenhülse (10) und eine die Innenhülse radial aussen umgebende Aussenhülse (12) umfasst, die mit der Innenhülse (10) lösbar verbunden ist, und der Kopplungsabschnitt (16) mindestens teilweise der Innenhülse (10) zugeordnet ist.

## Beschreibung

Die vorliegende Erfindung betrifft einen Abformpfosten für ein Dentalimplantat gemäss dem Oberbegriff des Anspruchs 1. Die Erfindung betrifft weiter ein Verfahren zur Abformung eines Dentalimplantats mit diesem Abformpfosten sowie auf die Verwendung des Abformpfostens für das "Open tray"-Abformen.

Abformpfosten (auch "Abdruckpfosten") werden in der Zahnmedizin dazu verwendet, die Lage und Ausrichtung eines im Kieferknochen eingebrachten Dentalimplantats in Relation zu seiner Umgebung auf ein sogenanntes Meistermodell zu übertragen, anhand welchem der Zahntechniker das auf das Dentalimplantat aufzubringende prothetische Element anfertigt.

Dazu weist der Abformpfosten üblicherweise eine Abformkappe und ein mit dieser verbundenes, geeignetes Befestigungselement zur Befestigung der Abformkappe am Dentalimplantat auf. Unter Verwendung eines Abformlöffels wird der Raum um den Abformpfosten und die benachbarten Gewebestrukturen im Mundbereich des Patienten mit einer anfänglich plastisch verformbaren, aushärtbaren Abformmasse ausgefüllt. Die nach der Aushärtung aus dem Mundbereich des Patienten entfernte Abformmasse bildet ein Negativmodell, welches als Vorlage für das Meistermodell dient.

Abformpfosten bzw. entsprechende Abformungsverfahren werden im Stand der Technik etwa in Schroeder, A. et al., "Orale Implantologie", 2. Auflage, Georg Thieme Verlag Stuttgart, 1994, S. 202 ff beschrieben. Weiter wird etwa auf EP-A-1274365, EP-A-1274366, WO2007/093648, US-B-6,213,773, US-B-6,379,148, US-B-6,524,106, US-B-6,508,650, EP-A-0747017 und US-B-6,045,361 verwiesen, die sich auch auf Abformpfosten beziehen.

Beim Abformen unterscheidet man zwischen dem "Open tray"-Abformen und dem "Closed tray"-Abformen. Dabei wird beim "Open tray"-Abformen im Gegensatz zum "Closed tray"-Abformen das Befestigungselement, mittels welchem die Abformkappe am Dentalimplantat befestigt wird, vor der Entfernung der Abformmasse aus dem Mundbereich des Patienten gelöst. Da das Befestigungselement in der Regel in Form einer Schraube vorliegt, weist der Abformlöffel in einem entsprechenden Bereich eine Aussparung auf, durch die die Schraube - etwa mit einem Schraubendreher - gegriffen werden kann. "Open tray"- und "Closed tray"-Abformungsverfahren sind dem Fachmann bekannt und werden etwa in US-B-7,066,736 beschrieben.

Beim Entfernen des Abformlöffels verbleibt beim "Open tray"-Abformen die Abformkappe in der Abformmasse. In der Folge kann in die Abformkappe ein Manipulierimplantat passgenau eingesetzt werden, welches seinerseits beim Erstellen des Meistermodells in den Hartgips eingebettet wird. Das Manipulierimplantat weist somit im Meistermodell exakt die Position des Dentalimplantats im Kieferknochen des Patienten auf. Abformpfosten, die für eine "Open tray"-Abformung verwendet werden können, werden etwa in US-B-5,213,502 und in US-A-2006/0121416 beschrieben.

Konventionelle Abformkappen weisen in ihrem apikalen, d.h. dem Dentalimplantat zugewandten Endbereich oft einen polygonalen Sockel oder eine polygonale Öffnung auf, welche(r) passgenau zur Öffnung bzw. zum Sockel im koronalen Endbereich des Dentalimplantats ausgestaltet ist und eine Verdrehsicherung zwischen der Abformkappe und dem Dentalimplantat gewährleisten soll. Dadurch kann sichergestellt werden, dass sich der Abformpfosten insbesondere während der Abformung nicht verdreht und somit die Drehlage des Dentalimplantats exakt auf das Manipulierimplantat übertragen werden kann. Überdies wird - im Falle, dass das Dentalimplantat eine koronale Öffnung aufweist - ein Eindringen der Abformmassen in diese Öffnung verhindert.

Allerdings ist die sich durch diese Verdrehsicherung ergebende Haftreibung zwischen Abformkappe und Dentalimplantat auch in Achsrichtung relativ gross. Diese fällt vor allem bei der gleichzeitigen Abformung mehrerer schief zu einander stehender Abformpfosten ins Gewicht. Eine Entfernung der Abdruckmasse lässt sich in solchen Fällen nur unter Ausnutzung der Elastizität der Abdruckmasse bewerkstelligen, wobei die Gefahr besteht, dass es bei einer grösseren Auslenkung des Abformpfostens aus seiner bei der Abformung eingenommenen Position zu einer plastischen Verformung der Abformmasse kommt, was in einer Verfälschung der auf das Manipulierimplantat übertragenen Position resultieren kann.

Mit diesem Problem befasst sich etwa EP-A-1274365, die ein pfostenförmiges Element beschreibt, welches aus einem in einer Aufnahmeausnehmung des Implantats fixierbaren Unterteil und einem in dieses einsetzbaren oder auf dieses aufsetzbaren Oberteil besteht, wobei das Oberteil ausgehend von der Verbindungsposition des pfostenförmigen Elements in unterschiedliche Richtungen linear vom Unterteil entfernbar ist. Nachteilig am pfostenförmigen Element gemäss EP-A-1274365 ist, dass es sich nur für äusserst spezifisch ausgestaltete Implantate eignet. Im Weiteren weist das pfostenförmige Element den Nachteil auf, dass dieses zwecks Fixierung am Implantat einen Klebering aufweist, was hinsichtlich der Verträglichkeit durch den Patienten zu Problemen führen kann. Im übrigen wird auf die in US-B-7,066,736, Spalte 2, Zeilen 20 bis 24 beschriebenen Nachteile des "Closed tray"-Verfahrens verwiesen.

Aufgabe der vorliegenden Erfindung ist es somit, einen vielseitig einsetzbaren und für das "Open tray"-Abformen verwendbaren Abformpfosten zur Verfügung zu stellen, welcher selbst beim gleichzeitigen Abformen mehrerer schief zueinander stehender Dentalimplantate eine sehr genaue Übertragung der Lage der Dentalimplantate gewährleistet.

Die Aufgabe wird erfindungsgemäss gelöst durch den Abformpfosten gemäss Anspruch 1. Vorteilhafte Ausführungsformen sind in den abhängigen Ansprüchen wiedergegeben.

Gemäss der vorliegenden Erfindung umfasst die Abformkappe des Abformpfostens eine Innenhülse und eine die Innenhülse radial aussen umgebende Aussenhülse, die mit der Innenhülse lösbar verbunden ist. Mithin ist die Innenhülse zwischen dem Befestigungselement und der Aussenhülse angeordnet, wobei letztere bei der Abformung eine Barriere bildet, die verhindert, dass die Innenhülse mit der Abformmasse in Kontakt kommt.

Erfindungsgemäss ist der Kopplungsabschnitt, also derjenige Bereich, der dazu bestimmt ist, mit dem Dentalimplantat verbunden zu werden, mindestens teilweise der Innenhülse zugeordnet.

Diese Ausbildung der Abformkappe in zwei Teilen erlaubt es, dass bei der Abformung derjenige Schritt, in dem die Verbindung zwischen Abformkappe und Dentalimplantat aufgehoben und die Abformmasse vom Dentalimplantat entfernt wird, in zwei voneinander getrennten Schritten erfolgt.

In einem ersten der beiden Schritte wird gleichzeitig mit oder unmittelbar nach dem Lösen des Befestigungselements die Verbindung zwischen der Abformkappe und dem Dentalimplantat mindestens teilweise aufgehoben.

Dies kann etwa für den Fall, dass die Abformkappe mit ihrem Kopplungsabschnitt in einer entsprechenden Öffnung des Dentalimplantats verankert ist, einfach dadurch bewerkstelligt werden, dass die Innenhülse bzw. deren Kopplungsabschnitt aus der Öffnung herausgezogen wird. Bei dieser Verschiebung der Innenhülse in Längsrichtung des Dentalimplantats bzw. der darin verankerten Abformkappe wird die Aussenhülse stationär in der diese umgebenden Abformmasse gehalten. Da das Herausziehen der Innenhülse in diesem Schritt in Längsrichtung erfolgt, kann die sich ergebende Haftreibung zwischen Innenhülse und Dentalimplantat auf ein Minimum beschränkt werden.

In einem zweiten der beiden Schritte kann dann die Abformmasse mit der darin eingebetteten Aussenhülse entfernt werden, die - wenn überhaupt - dann nur über eine sehr geringe Kontaktfläche und somit über eine sehr geringe Haftreibung mit dem Dentalimplantat verfügt.

Wie oben ausgeführt, wird als Kopplungsabschnitt derjenige Bereich der Abformkappe bezeichnet, der im montierten Zustand mit dem Dentalimplantat verbunden ist. Der Kopplungsabschnitt kann etwa derart ausgestaltet sein, um in einer entsprechenden Öffnung eines Dentalimplantats verankert zu werden. Alternativ kann der Kopplungsabschnitt aber auch derart ausgestaltet sein, um auf einen Sockel etwa eines zweiteiligen Dentalimplantats aufgesetzt zu werden. In der Regel sind Dentalimplantat und Abformpfosten im montierten Zustand koaxial zueinander angeordnet, was eine möglichst zuverlässige Übertragung der axialen Ausrichtung des Dentalimplantats auf das Meistermodell ermöglicht.

In der Regel weist die Innenhülse und/oder die Aussenhülse im Kopplungsabschnitt dentalimplantatseitig eine Anschlagsfläche auf, die dazu bestimmt ist, in montiertem Zustand auf einer entsprechenden Gegenanschlagsfläche des Dentalimplantats aufzuliegen, wodurch eine exakte Übertragung der "Tiefenlage" des Dentalimplantats im umliegenden Gewebe gewährleistet werden kann.

Erfindungsgemäss sind die Innenhülse und die Aussenhülse lösbar miteinander verbunden, wobei im Allgemeinen die Aussenfläche der Innenhülse mindestens teilweise auf der Innenfläche der Aussenhülse aufliegt. In der Regel sind Innenhülse und Aussenhülse zueinander lediglich in Längsrichtung verschiebbar.

Gemäss einer bevorzugten Ausführungsform weist der Kopplungsabschnitt der Abformkappe eine Dentalimplantatsverdrehsicherung zur Verdrehsicherung zwischen der Abformkappe und dem Dentalimplantat auf. Dies ermöglicht es, dass nicht nur die die Tiefenlage und die axiale Ausrichtung des Dentalimplantats in Relation zum umliegenden Gewebe, sondern auch dessen Drehlage exakt auf das Meistermodell übertragen werden kann.

Dabei ist im Sinne der Minimierung der Haftreibung im oben beschriebenen zweiten Schritt die Dentalimplantatsverdrehsicherung vorzugsweise vollständig der Innenhülse zugeordnet. Dadurch kann die zwischen der in der Abformmasse eingebetteten Aussenhülse und dem Dentalimplantat ausgebildete Kontaktfläche - sofern überhaupt vorhanden - minimal gehalten werden.

Im Übrigen wird eine möglichst exakte Übertragung der Drehlage auf das Meistermodell dann gewährleistet, wenn die Innenhülse weiter eine Aussenhülseverdrehsicherung zur Verdrehsicherung zwischen der Innenhülse der Aussenhülse aufweist. Dadurch wird sichergestellt, dass die Information betreffend Drehlage nicht nur vom Dentalimplantat auf die Innenhülse, sondern auch von der Innenhülse auf die in der Abformmasse verbleibende Aussenhülse übertragen wird. Diese Aussenhülseverdrehsicherung kann etwa in Form einer in Längsrichtung verlaufenden Nut vorliegen, in die eine an der Aussenhülse entsprechend angeordnetes Rastelement, wie etwa eine Schiene oder eine Nase, eingreift.

Gemäss einer weiteren bevorzugten Ausführungsform sind die Innenhülse und die Aussenhülse in in Umfangsrichtung vorgegebener Lage zueinander angeordnet. Dies kann unter Bezugnahme auf die beschriebene Aussenhülseverdrehsicherung etwa dadurch bewerkstelligt werden, dass lediglich eine einzige Nut und eine einzige in diese eingreifende Schiene vorliegen. Mithin kann über die in der Abformmasse verbleibende Aussenhülse die Drehlage des Dentalimplantats eindeutig dem Manipulierimplantat zugeordnet bzw. auf das Meistermodell übertragen werden.

In einer besonders einfachen und deshalb bevorzugten Ausführungsform sind die Innenhülse und die Aussenhülse koaxial zueinander angeordnet.

Weiter ist bevorzugt, dass die Aussenhülse auf ihrer äusseren Oberfläche eine Profilierung aufweist, um einen innigen Formschluss zwischen der Abformkappe und der aushärtbaren Abformmasse zu gewährleisten. Die Profilierung kann insbesondere in Form von Auskragungen vorliegen, die im Wesentlichen rechtwinklig zur Längsrichtung der Abformkappe von deren äusseren Oberfläche abstehen.

Gemäss einer bevorzugten Ausführungsform ist im Sinne einer möglichst exakten Übertragung der Lage des Dentalimplantats auf das Meistermodell der Kopplungsabschnitt derart ausgeformt, um passgenau in einer entsprechend ausgeformten Öffnung des Dentalimplantats aufgenommen zu werden.

Da die gebräuchlichen Dentalimplantate, wie etwa die Bone Level-Implantate der Fa. Straumann, in ihrer koronalen Öffnung konventionell über einen zylindrischen Bereich mit mindestens einer Anschlagsfläche verfügen, die dazu bestimmt ist, mit einer entsprechenden Gegenanschlagsfläche eines Aufbauteils eine Verdrehsicherung zu gewährleisten, ist gemäss einer bevorzugten Ausführungsform des erfindungsgemässen Abformpfostens die Innenhülse im Kopplungsabschnitt in Form eines entsprechenden Zylinders mit Gegenanschlagsflächen ausgeformt. Insbesondere bevorzugt ist etwa ein polygonaler Zylinder. Alternativ ist bei entsprechender Ausformung der Öffnung des Dentalimplantats aber auch die Form eines Pyramidenstumpfs denkbar.

Die oben erwähnten gebräuchlichen Dentalimplantate weisen überdies oft einen konischen Endbereich auf. Um zu gewährleisten, dass auch bei der. Abformung dieser Dentalimplantate die Abformmasse nicht in die Öffnung eindringen kann, weist die Aussenhülse gemäss einer bevorzugten Ausführungsform im Kopplungsabschnitt die Form eines Kegelstumpfs auf, der dazu bestimmt ist, vom entsprechend ausgeformten konischen Endbereich passgenau aufgenommen zu werden. Alternativ ist je nach Ausformung der Öffnung des Dentalimplantats auch denkbar, dass die Aussenhülse im Kopplungsabschnitt in Form eines Kreiszylinders ausgebildet ist.

Im Übrigen kann ein Eindringen der Abformmasse in die Öffnung besagter Dentalimplantate dadurch verhindert werden, dass statt der Aussenhülse die Innenhülse in ihrem entsprechenden Abschnitt in Form eines Kreiszylinders oder eines Kegelstumpfs ausgebildet ist.

Erfindungsgemäss weist die Abformkappe eine sich in deren Längsrichtung erstreckende Ausnehmung auf. Diese ist in der Regel im Wesentlichen zylinderförmig ausgebildet. Die Ausnehmung wird von einem Befestigungselement zur Befestigung der Abformkappe am Dentalimplantat durchgriffen.

In der Regel liegt das Befestigungselement in Form einer Schraube vor. Diese weist ein einem Innengewinde der koronalen Öffnung des Dentalimplantats entsprechendes Aussengewinde auf.

Gemäss einer weiteren bevorzugten Ausführungsform weist das Befestigungselement ein Mitnehmerelement auf, welches dazu bestimmt ist, mit einem entsprechenden Mitnehmergegenelements der Innenhülse zusammenzuwirken, um beim Herausziehen des Befestigungselements aus der Aussenhülse die Innenhülse mitzunehmen. Dadurch wird gewährleistet, dass das Herausziehen des Befestigungselements und der Innenhülse in einem einzigen Schritt durchführbar ist, ohne dass ein unter Umständen aufwendiges Herausziehen der Innenhülse in einem separaten Schritt nötig wäre.

Ein Mitnehmerelement kann etwa durch den Aussengewindeabschnitt des Befestigungselements gebildet werden, während das Mitnehmergegenelement etwa in Form eines in die vom Befestigungselement durchgriffene Ausnehmung ragenden Vorsprungs ausgebildet sein kann. Dabei wird der Durchmesser der Ausnehmung in diesem Bereich durch den Vorsprung derart verjüngt, dass er geringer ist als der Durchmesser des Aussengewindeabschnitts.

Weiter ist bevorzugt, dass das Befestigungselement formschlüssig mit der Innenhülse verbindbar ist. Durch diesen Formschluss wird ein zusätzlicher Verlierschutz des Befestigungselements bzw. der Innenhülse gewährleistet.

Gemäss einer weiteren bevorzugten Ausführungsform umfasst das Befestigungselement in seinem okklusalen, d.h. im montierten Zustand vom Dentalimplantat abgewandten Endbereich einen Kopfteil mit einer Anschlagsfläche, die dazu bestimmt ist, mit einer stirnseitigen Gegenanschlagsfläche der Innenhülse und der Aussenhülse derart zusammenzuwirken, dass die Innenhülse und die Aussenhülse verschiebesicher mit dem Dentalimplantat verbindbar sind. Dadurch kann gewährleistet werden, dass sowohl die Innenhülse als auch die Aussenhülse während der Abformung auch in Längsrichtung in ihrer Position festgehalten werden, was eine exakte Übertragung der Lage des Dentalimplantats auf das Meistermodell weiter sicherstellt.

Die genannten Abformpfosten sind in besonderer Weise für die die dem Fachmann bestens bekannten Bone Level-Implantate geeignet, wie sie von der Fa. Straumann vertrieben werden. Aufgrund der Anwendung besagter Bone Level-Implantaten ergibt sich bei der Abformung oft das Problem, dass das Befestigungselement unzureichend lang ist, um aus der okklusalen Oberfläche der Abformmasse zu ragen. Um das Befestigungselement vom Dentalimplantat zu lösen, ist es somit oft erforderlich, das Befestigungselement freizulegen, etwa indem die Abformmasse in besagtem Bereich bis auf eine entsprechende Tiefe abgeschält wird.

Diesem Problem wird gemäss einem weiteren Aspekt der Erfindung Rechnung getragen, gemäss welchem der Abformpfosten zudem ein am Befestigungselement angeordnetes Verlängerungselement umfasst.

Dabei liegt das Verlängerungselement vorzugsweise in Form eines auf das Befestigungselement aufgesetzten Hohlzylinders vor. In der Regel wird der Hohlzylinder dabei auf das Kopfteil aufgesetzt, wobei der innere Durchmesser des Hohlzylinders im Wesentlichen dem äusseren Durchmesser des Kopfteils entspricht. Bei der Abformung verhindert der Hohlzylinder, dass der in der Regel am Kopfteil angeordnete Griffbereich des Befestigungselements von der Abformmasse überdeckt wird. Vielmehr verbleibt der Griffbereich durch den vom Hohlzylinder gebildeten Kanal für ein Werkzeug zum Lösen des Befestigungselements, etwa für einen Schraubendreher, zugänglich.

In der Regel sind die Innenhülse und das Befestigungselement des erfindungsgemässen Abformpfostens aus Metall gefertigt, während die Aussenhülse aus Kunststoff gefertigt ist. Denkbar ist für jede einzelne Komponente aber auch jedes andere für die entsprechenden Zwecke geeignete Material.

Wie oben ausgeführt, erlaubt es die vorliegende Erfindung, denjenigen Schritt, in dem die Verbindung zwischen Abformkappe und Dentalimplantat aufgehoben wird und die Abformmasse vom Dentalimplantat entfernt wird, in zwei voneinander getrennten Schritten durchzuführen.

Mithin betrifft die Erfindung zudem ein Verfahren zur Abformung eines Dentalimplantats mit dem erfindungsgemässen Abformpfosten umfassend die aufeinanderfolgenden Schritte, dass
a) der Abformpfosten mittels des Befestigungselements am Dentalimplantat befestigt wird,
b) der Abformpfosten und die diesen umgebenden Gewebestrukturen mit einer Abformmasse abgeformt werden,
c) das Befestigungselement gelöst und die Verbindung zwischen der Abformkappe und dem Dentalimplantat zumindest teilweise aufgehoben wird und
d) die Abformmasse zusammen mit der Aussenhülse der Abformkappe entfernt wird.

Wie oben ebenfalls erwähnt, betrifft die Erfindung zudem die Verwendung des erfindungsgemässen Abformpfostens für das "Open tray"-Abformen.

Die Erfindung wird anhand der Figuren weiter beschrieben.

Es zeigen:
- Fig. 1: eine Seitenansicht eines erfindungsgemässen Abformpfostens, der in einem schematisch dargestellten Dentalimplantat verankert ist und auf den ein Verlängerungselement aufgesetzt ist;
- Fig. 2: ein Längsschnitt durch die in Fig. 1 gezeigte Ausführungsform entlang der Linie II-II', wobei das Befestigungselement in Seitenansicht dargestellt ist;
- Fig. 3: die in Fig. 1 gezeigte Ausführungsform im Querschnitt entlang der Linie III-III'; und
- Fig. 4: das in Fig. 2 gezeigte Befestigungselement hälftig in Querschnittdarstellung und hälftig in Seitenansichtsdarstellung.

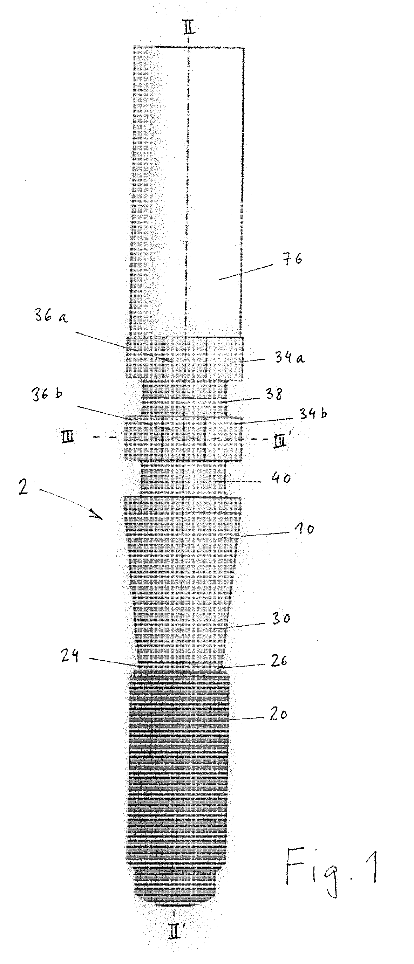

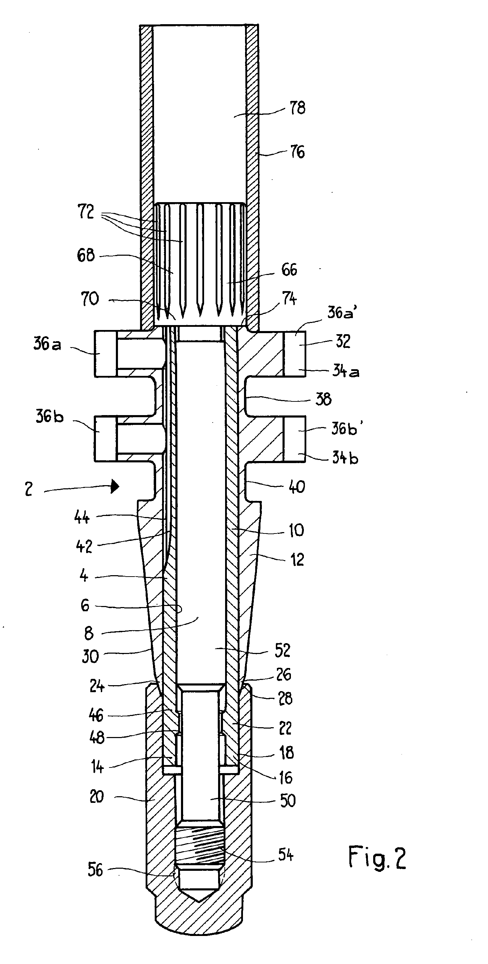

Wie aus Fig. 1 in Verbindung mit Fig. 2 ersichtlich ist, umfasst der erfindungsgemässe Abformpfosten 2 eine hülsenförmige Abformkappe 4 mit einer im Wesentlichen zylinderförmigen, sich in Längsrichtung erstreckenden Ausnehmung 6 und ein die Ausnehmung 6 durchgreifendes, in Form einer Schraube vorliegende Befestigungselement 8.

Die Abformkappe 4 umfasst eine radial innen liegende Innenhülse 10 und eine koaxial zu dieser angeordnete, radial aussen liegende Aussenhülse 12; mithin ist die Innenhülse 10 zwischen der Aussenhülse 12 und dem Befestigungselement 8 angeordnet.

Die Abformkappe 4 weist in ihrem apikalen Endbereich 14 einen Kopplungsabschnitt 16 auf, der passgenau in einer entsprechend ausgeformten Öffnung 18 des Dentalimplantats 20 verankert ist. Dabei ist die Innenhülse 10 im Kopplungsabschnitt 16 in Form eines (Hohl-)Zylinders 22 ausgebildet, dessen Mantelfläche mindestens einen abgeflachten Bereich als Anschlagsfläche (nicht gezeigt) umfasst, die mit einer entsprechenden Gegenanschlagsfläche des Dentalimplantats derart zusammenwirkt, um eine Dentalimplantatsverdrehsicherung zu bilden.

Die Aussenhülse 12 ist in ihrem apikalen Endbereich 24 im Kopplungsabschnitt 16 in Form eines (Hohl-)Kegelstumpfs 26 ausgebildet, welcher passgenau zum entsprechenden konischen Bereich 28 der Öffnung 18 des Dentalimplantats 20 ausgeformt ist. In vom Dentalimplantat 20 abgewandter Richtung schliesst an den apikalen Endbereich 24 ein ebenfalls kegelstumpfförmiger Mittelbereich 30 an. Der apikale Endbereich 24 ist bezüglich des Mittelbereichs 30 leicht zugespitzt.

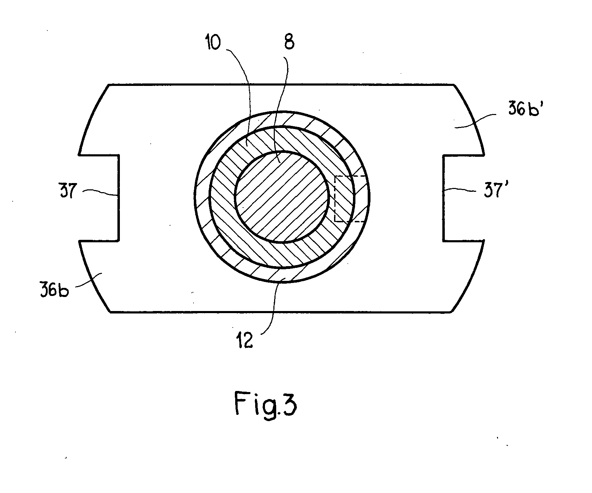

In ihrem dem apikalen Endbereich 24 gegenüberliegenden okklusalen Endbereich 32 weist die Aussenhülse 12 zwei Auskragungsabschnitte 34a, 34b mit jeweils zwei in Umfangsrichtung um 180° beabstandeten Auskragungen 36a, 36a' bzw. 36b, 36b' auf. Die Auskragungsabschnitte 34a, 34b sind durch ein verjüngtes Zwischensegment 38 voneinander getrennt. Unterhalb, d.h. in apikaler Richtung des unteren Auskragungsabschnitts 34b schliesst ein weiteres verjüngtes Segment 40 an, dessen Querschnitt im Wesentlichen dem Querschnitt des Zwischensegments 38 entspricht und das den Mittelbereich 30 vom Auskragungsabschnitt 34b trennt. Wie insbesondere aus Fig. 3 ersichtlich ist, weisen die Auskragungen 36a, 36a', 36b, 36b' in Längsrichtung verlaufende Aussparungen 37, 37' auf. Die derartig ausgestaltete Profilierung hat zum Zweck, bei der Abformung einen innigen Formschluss zwischen der Aussenhülse 12 und der Abformmasse zu gewährleisten.

Die Innenhülse 10 weist in ihrer oberen, d.h. okklusalen Hälfte eine in Längsrichtung verlaufende Nut 42 auf, die zusammen mit einer in dieser geführten Schiene 44 der Aussenhülse 12 eine Verdrehsicherung zwischen der Innenhülse 10 und der Aussenhülse 12 gewährleistet. Dadurch, dass lediglich eine einzige Nut 42 und eine einzige Schiene 44 ausgebildet sind, ist die Lage der Innenhülse 10 zur Aussenhülse 12 in Umfangsrichtung eindeutig vorgegeben.

Innenwandseitig weist die Innenhülse 10 in ihrem apikalen Endbereich 46 zudem einen umlaufenden Vorsprung 48 auf, welcher den Innendurchmesser der Ausnehmung 6 verjüngt. Dieser Bereich der Ausnehmung 6 wird von einem ersten Bolzenabschnitt 50 des Befestigungselement 8 durchgriffen, an den okklusal ein zweiter Bolzenabschnitt 52 mit gegenüber dem ersten Bolzenabschnitt 50 grösserem Durchmesser anschliesst. Apikal schliesst an den ersten Bolzenabschnitt 50 ein Aussengewindeabschnitt 54 an, welcher einem entsprechenden Innengewindeabschnitt 56 in der Öffnung 18 des Dentalimplantats 20 entspricht. Der Durchmesser des Aussengewindeabschnitt 54 entspricht in der in den Figuren gezeigten Ausführungsform im Wesentlichem dem Durchmesser des zweiten Bolzenabschnitts 52.

Das Befestigungselement 8 weist in seinem okklusalen, d.h. dem Dentalimplantat 20 abgewandten, aus der Abformkappe 4 ragenden Endbereich 66 einen Kopfteil 68 auf, der als Kreiszylinder 70 mit in Längsrichtung verlaufenden rillenförmigen Vertiefungen 72 ausgebildet ist. Die der Abformkappe 4 zugewandte Stirnseite 74 des Kopfteils 68 bildet eine Anschlagsfläche für die Aussenhülse 12, wodurch deren Verschiebung in die vom Dentalimplantat 20 abgewandte Richtung begrenzt wird. Auf den Kopfteil 68 des Befestigungselements 8 ist ein im Wesentlichen hohlzylinderförmiges Verlängerungselement 76 aufgesetzt, dessen Innendurchmesser im Wesentlichen dem Durchmesser des Kopfteils 68 entspricht. Das Verlängerungselement 76 verhindert beim Abformen, dass die Abformmasse den Kopfteil 68 bedeckt.

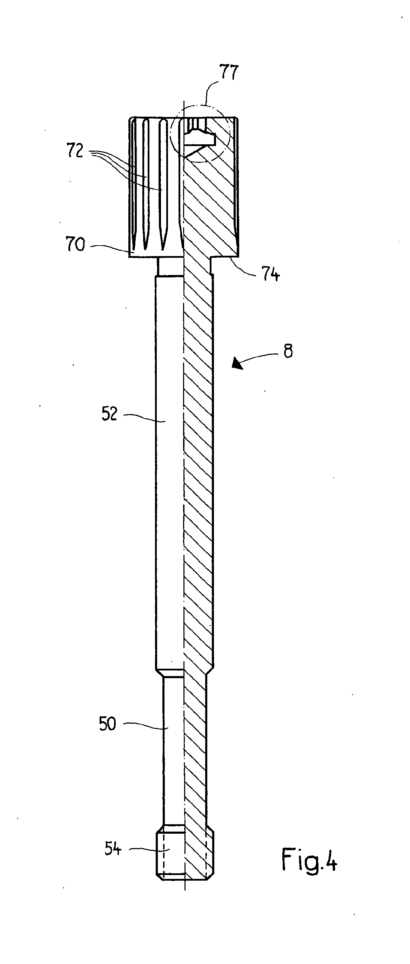

Wie insbesondere aus Fig. 4 ersichtlich ist, weist das Kopfteil 68 des Befestigungselements 8 an ihrem okklusalen freien Ende eine Kerbung 77 für einen Schraubendreher auf.

Bei der Anwendung des beschriebenen Abformpfostens 2 wird dieser im abzuformenden Dentalimplantat 20 verankert, wobei der Kopplungsabschnitt 16 in die Öffnung 18 des Dentalimplantats 20 eingesetzt und mit dem Befestigungselement 8 befestigt wird. Sofern die Abformkappe 4 nicht schon anfänglich bis zum Anschlag in die Öffnung 18 eingesetzt war, wird sie während der Befestigung mittels des Kopfteils 68 des Befestigungselements 8 weiter in die Öffnung 18 eingeschoben, bis die Anschlagsfläche 62 der Innenhülse 10 auf der Gegenanschlagsfläche 64 des Dentalimplantats 20 aufliegt. Die Aussenhülse 12 wird dabei durch die Klemmwirkung zwischen Dentalimplantat 20 und Kopfteil 68 unbeweglich in Position gehalten. Das Festziehen des Befestigungselements 8 erfolgt in der Regel von Hand und wird durch die erhöhte Griffigkeit des Kopfteils 68 vereinfacht. Alternativ kann das Festziehen aber auch mit einem für die entsprechenden Zwecke geeigneten Werkzeug, wie etwa einem Schraubendreher, erfolgen.

Vor dem Abformen wird das Verlängerungselement 76 auf das Kopfteil 68 aufgesetzt, sodass dieses durch die nachfolgend um den Abformpfosten 2 aufgetragene Abformmasse nicht überdeckt wird.

Nach dem Aushärten der Abformmasse wird das Befestigungselement 8 in der Regel mittels eines Schraubendrehers gelöst, wobei die Zugänglichkeit des Kopfteils 68 des Befestigungselements 8 durch den durch das Verlängerungselement 76 gebildeten Kanal 78 gewährleistet ist.

Das aus dem Innengewindeabschnitt 56 der Öffnung 18 des Dentalimplantats 20 gelöste Befestigungselement 8 kann schliesslich aus der in der Abformmasse eingebetteten Aussenhülse 12 unter Mitnahme der Innenhülse 10 axial okklusal verschoben werden, wobei der Aussengewindeabschnitt 54 als Mitnehmerelement und der innenwandseitige Vorsprung 48 der Innenhülse 10 als Mitnehmergegenelement figuriert.

Schliesslich wird die Abformmasse mit der darin eingebetteten Aussenhülse 12 vom Dentalimplantat 20 entfernt. Dabei ist die Haftreibung zwischen dem kegelstumpfförmig ausgebildeten Endbereich 24 der Aussenhülse 12 und dem entsprechenden konischen Bereich 28 der Öffnung 18 des Dentalimplantats 20 aufgrund der geringen Kontaktfläche selbst dann gering, wenn die Verschiebung schräg zur Längsrichtung der Aussenhülse 12 erfolgt.

## Patentansprüche

1. Abformpfosten für ein Dentalimplantat (20) umfassend
eine hülsenförmige Abformkappe (4) mit einem Kopplungsabschnitt (16), der dazu bestimmt ist, mit dem Dentalimplantat (20) verbunden zu werden, und einer sich in Längsrichtung der Abformkappe (4) erstreckenden Ausnehmung (6) und
ein die Ausnehmung (6) durchgreifendes Befestigungselement (8) zur Befestigung der Abformkappe (4) am Dentalimplantat (20),
**dadurch gekennzeichnet, dass** die Abformkappe (4) eine Innenhülse (10) und eine die Innenhülse radial aussen umgebende Aussenhülse (12) umfasst, die mit der Innenhülse (10) lösbar verbunden ist, und der Kopplungsabschnitt (16) mindestens teilweise der Innenhülse (10) zugeordnet ist.

2. Abformpfosten nach Anspruch 1, **dadurch gekennzeichnet, dass** der Kopplungsabschnitt (16) eine Dentalimplantatsverdrehsicherung zur Verdrehsicherung zwischen der Abformkappe (4) und dem Dentalimplantat (20) aufweist.

3. Abformposten nach Anspruch 2, **dadurch gekennzeichnete, dass** die Dentalimplantatsverdrehsicherung vollständig der Innenhülse (10) zugeordnet ist.

4. Abformpfosten nach Anspruch 3, **dadurch gekennzeichnet, dass** die Innenhülse (10) weiter eine Aussenhülseverdrehsicherung zur Verdrehsicherung zwischen der Innenhülse (10) und der Aussenhülse (12) aufweist.

5. Abformpfosten nach einem der vorhergehenden Ansprüche, **dadurch gekennzeichnet, dass** die Innenhülse (10) und die Aussenhülse (12) in in Umfangsrichtung vorgegebener Lage zueinander angeordnet sind.

6. Abformpfosten nach einem der vorhergehenden Ansprüche, **dadurch gekennzeichnet, dass** die Innenhülse (10) und die Aussenhülse (12) koaxial zueinander angeordnet sind.

7. Abformpfosten nach einem der vorhergehende Ansprüche, **dadurch gekennzeichnet, dass** der Kopplungsabschnitt (16) derart ausgeformt ist, um passgenau in einer entsprechend ausgeformten Öffnung (18) des Dentalimplantats (20) aufgenommen zu werden.

8. Abformpfosten nach Anspruch 7, **dadurch gekennzeichnet, dass** die Innenhülse (10) im Kopplungsabschnitt (16) in Form eines polygonalen Zylinders oder eines Pyramidenstumpfs ausgebildet ist.

9. Abformpfosten nach Anspruch 7 oder 8, **dadurch gekennzeichnet, dass** die Aussenhülse (12) im Kopplungsabschnitt (16) in Form eines Kreiszylinders oder eines Kegelstumpfs ausgebildet ist.

10. Abformpfosten nach einem der vorhergehenden Ansprüche, **dadurch gekennzeichnet, dass** die Aussenhülse (12) auf ihrer äusseren Oberfläche eine Profilierung aufweist.

11. Abformpfosten nach einem der vorhergehenden Ansprüche, **dadurch gekennzeichnet, dass** das Befestigungselement (8) eine Schraube ist.

12. Abformpfosten nach einem der vorhergehenden Ansprüche, **dadurch gekennzeichnet, dass** das Befestigungselement (8) ein Mitnehmerelement aufweist, welches dazu bestimmt ist, mit einem entsprechenden Mitnehmergegenelemerit der Innenhülse (10) derart zusammenzuwirken, um bei der Verschiebung des Befestigungselements (8) in die vom Kopplungsabschnitt (16) abgewandte Richtung die Innenhülse (10) mitzunehmen.

13. Abformpfosten nach einem der vorhergehenden Ansprüche, **dadurch gekennzeichnet, dass** das Befestigungselement (8) formschlüssig mit der Innenhülse (10) verbunden ist.

14. Abformpfosten nach einem der vorhergehenden Ansprüche, **dadurch gekennzeichnet, dass** das Befestigungselement (8) in seinem im montierten Zustand vom Dentalimplantat (20) abgewandten Endbereich einen Kopfteil (68) mit einer Anschlagsfläche umfasst, die dazu bestimmt ist, mit einer stirnseitigen Gegenanschlagsfläche der Innenhülse (10) und der Aussenhülse (12) derart zusammenzuwirken, dass die Innenhülse (10) und die Aussenhülse (12) verschiebesicher mit dem Dentalimplantat (20) verbindbar sind.

15. Abformpfosten nach einem der vorhergehenden Ansprüche, **gekennzeichnet durch** ein am Befestigungselement angeordnetes Verlängerungselement (76).

16. Abformpfosten nach Anspruch 15, **dadurch gekennzeichnet, dass** das Verlängerungselement (76) in Form eines auf das Befestigungselement (8) aufgesetzten Hohlzylinders vorliegt.

17. Verfahren zur Abformung eines Dentalimplantats mit einem Abformpfosten nach einem der vorhergehenden Ansprüche umfassend die aufeinanderfolgenden Schritte, dass
a) der Abformpfosten (2) mittels des Befestigungselements (8) am Dentalimplantat (20) befestigt wird,
b) der Abformpfosten (2) und die diesen umgebenden Gewebestrukturen mit einer Abformmasse abgeformt werden,
c) das Befestigungselement (8) gelöst und die Verbindung zwischen der Abformkappe (4) und dem Dentalimplantat (20) zumindest teilweise aufgehoben wird und
d) die Abformmasse zusammen mit der Aussenhülse (12) der Abformkappe (4) vom Dentalimplantat (20) entfernt wird.

18. Verwendung des Abformpfostens nach einem der Ansprüche 1 bis 16 für das "Open tray"-Abformen.
